# EUROPÄISCHE PATENTANMELDUNG

(11) **EP 1 391 981 A2**
(43) Veröffentlichungstag der Anmeldung: **25.02.2004**
(21) Anmeldenummer: 03017910.5
(22) Anmeldetag: 06.08.2003
(51) Int. Cl.: H02K 21/22, H02K 1/18

(54) **Transversalflussmaschine**

(30) Priorität: 14.08.2002 DE 10237203
(71) Anmelder: DEERE & COMPANY, Moline, Illinois 61265-8098 (US)
(72) Erfinder: Weiss, Heinz, 64625 Bensheim (DE); Bernhardt, Gerd, Prof.Dr.-Ing. habil., 01728 Hänichen (DE); Szakacs, Tamas, 8500 Papa (HU); Palm, Uwe, 84036 Landshut (DE)
(74) Vertreter: Lau-Loskill, Philipp, Dipl.-Phys.

(57) **Zusammenfassung**

Es wird eine Transversalflussmaschine beschrieben mit wenigstens zwei im Wesentlichen zylinder- oder scheibenförmigen auf einer Achse (10) montierten inneren Bauteilen (34, 36) und mit die inneren Bauteile (34, 36) konzentrisch umgebenden äußeren Bauteilen (74, 76). Die inneren und äußeren Bauteile sind relativ zueinander verdrehbar. Miteinander korrespondierende innere Bauteile (34, 36) und äußere Bauteile (74, 76) enthalten jeweils wenigstens eine Phase der Transversalflussmaschine. Sie enthalten einerseits in Umfangsrichtung zueinander beabstandet angeordnete, alternierend gepolte Permanentmagnete (74, 76) und andererseits in Umfangsrichtung angeordnete Ankerelemente (54, 56), welche wenigstens eine sich in Umfangsrichtung erstreckende Erregerwicklung (58, 60) einschließen.

Es wird vorgeschlagen, dass die inneren Bauteile (34, 36) auf einer zu einer Seite hin progressiv gestuft ausgebildeten Achse (10) befestigt sind und dass jeder einem inneren Bauteil (34, 36) zugeordnete, sich axial erstreckende Abschnitte (30, 32) der Achse (10) ein von der Zylinderform abweichendes Profil aufweist, welches mit einem entsprechenden Profil einer zentralen Ausnehmung (38) des zugehörigen inneren Bauteils (34, 36) übereinstimmt. Die Profile unterschiedlicher axialer Achsabschnitte (30, 32) sind hinsichtlich der Umfangsrichtung derart zueinander versetzt, dass sich für die einzelnen Phasen unterschiedliche Phasenlagen ergeben.

## Beschreibung

Die Erfindung betrifft eine Transversalflussmaschine mit wenigstens zwei im Wesentlichen zylinder- oder scheibenförmigen auf einer Achse montierten inneren Bauteilen und mit die inneren Bauteile konzentrisch umgebenden äußeren Bauteilen. Die inneren und äußeren Bauteile sind relativ zueinander verdrehbar. Miteinander korrespondierende innere Bauteile und äußere Bauteile enthalten jeweils wenigstens eine Phase der Transversalflussmaschine. Sie enthalten einerseits in Umfangsrichtung zueinander beabstandet angeordnete, alternierend gepolte Permanentmagnetelemente und andererseits in Umfangsrichtung angeordnete Ankerelemente, welche wenigstens eine sich in Umfangsrichtung erstreckende Erregerwicklung einschließen.

Die DE-A-35 36 538 beschreibt unter anderem eine Transversalflussmaschine mit Permanenterregung der eingangs genannten Art. Insbesondere ist eine Welle dargestellt, die sich über ein Lager verdrehbar an einem feststehenden Konstruktionsteil abstützt. Die Welle trägt einen als Polrad dienenden Scheibenläufer, auf dessen äußerem Umfang eine Vielzahl von Permanentmagneten in Umfangsrichtung angeordnet sind. Dem Scheibenläufer sind am Konstruktionsteil befestigte Ankerelemente zugeordnet, die durch eine einzige (Bild 6) oder durch mehrere (Bild 5) in Umfangsrichtung verlaufende Ankerspulen induktiv gekoppelt sind. Eine mehrsträngige Anordnung kann durch Zwei- oder Mehrscheibenanordnungen verwirklicht werden, welche mit phasenverschobenen Strömen beaufschlagt werden, wobei die Anordnung der Ankerelemente in Bezug zum Polrad in Umfangsrichtung versetzt ist.

Eine andere elektrische Maschine, bei der das Transversalflusskonzept Anwendung findet und die zwei Phasen enthält, geht aus der WO 92/10023 hervor. Dort ist in einem Statorgehäuse der Maschine ein Rotor um eine Welle drehbar gelagert. Der Rotor besitzt eine zentrale Scheibe, an deren radial äußeren Umfang auf jeder axialen Seite eine Polstruktur angeordnet ist, welche in Umfangsrichtung angeordnete Reihen von Permanentmagneten aufweist, die wechselweise polarisiert sind. Jeder Polstruktur steht, getrennt durch einen Luftspalt, ein aus zwei Teilen aufgebauter Stator gegenüber, der aus einem radial außenliegenden Außenstator und einem radial innenliegenden Innenstator besteht. Der Außenstator enthält U-förmig ausgebildete Ankerelemente, deren offene Schenkel den Permanentmagneten der Polstrukturen gegenüber stehen. Innerhalb der Schenkel befindet sich eine in Umfangsrichtung des Rotors verlaufende Ringwicklung. Der Innenstator enthält Jochelemente, die den magnetischen Rückschluss für die Permanentmagnete bilden.

Im Vergleich zu Longitudinalflussmaschinen gleicher Baugröße entwickeln Transversalflussmaschinen ein erheblich höheres Drehmoment. Daher eignen sie sich besonders für Direktantriebe im Bereich der Fahrzeugtechnik und bringen den Vorteil mit sich, dass kostspielige und den Wirkungsgrad herabsetzende mechanische Getriebe entfallen können. Die Drehmomentanforderungen von Fahrzeugantrieben können jedoch je nach Einsatzart sehr unterschiedlich sein. So wird von einem Ackerschlepper für den Einsatz beim Pflügen bei relativ langsamer Fahrt und geringen Raddrehzahlen ein besonders hohes Drehmoment verlangt, während für den Transportbetrieb bei relativ hohen Fahrgeschwindigkeiten und hoher Raddrehzahl erheblich geringere Drehmomente gefordert werden. Es ist daher wünschenswert über ein Maschinenkonzept zu verfügen, dass eine individuelle Anpassung an die geforderten Drehmomente und Leistungen erlaubt, einen einfachen Aufbau aufweist und kostengünstig herstellbar und montierbar ist.

Die der Erfindung zugrunde liegende Aufgabe wird darin gesehen, einen Transversalflussantrieb der eingangs genannten Art anzugeben, durch den die eingangs genannten Probleme überwunden werden. Insbesondere sollen die inneren Bauteile zur Übertragung hoher Drehmomente starr auf der Achse befestigbar sein und eine gewünschte Phasenlage zueinander einnehmen. Dies soll auf einfache Weise bei geringem Herstellungs- und Montagaufwand erfolgen.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Bei der eingangs genannten Transversalflussmaschine sind gemäß der Erfindung die innere Bauteile auf einer zu einer Seite hin progressiv gestuft ausgebildeten Achse befestigt. Jeder einem inneren Bauteil zugeordnete, sich axial erstreckende Abschnitt der Achse weist ein von der Zylinderform abweichendes Profil auf, welches mit einem entsprechenden Profil einer zentralen Ausnehmung des zugehörigen inneren Bauteils übereinstimmt. Die Profile unterschiedlicher axialer Achsabschnitte sind hinsichtlich der Umfangsrichtung derart zueinander versetzt, dass sich für die einzelnen Phasen unterschiedliche Phasenlagen ergeben.

Der Phasenversatz kann dadurch erreicht werden, dass die Profile der Ausnehmung der inneren Bauteile relativ zu ihren Armaturen (Permanentmagnetelemente bzw. Ankerelemente) unterschiedliche Orientierungen einnehmen. Vorzugsweise werden jedoch innere Bauteile verwendet, die im Wesentlichen identisch ausgebildet sind und sich lediglich in der Größe ihrer zentralen Ausnehmung unterscheiden, wobei die Orientierung der Profile zu den Armaturen bei allen inneren Bauteilen übereinstimmt. In diesem Fall sind die den einzelnen Phasen zugeordneten Profile der Achse hinsichtlich der Umfangsrichtung zueinander versetzt.

Die gestufte Ausbildung der Achse ist derart ausgebildet, dass sich die inneren Bauteile bei der Montage nacheinander von einer Seite aus auf die Achse aufstecken und montieren lassen. Vorzugsweise liegen die inneren Bauteile in montiertem Zustand unmittelbar nebeneinander und bilden ein Scheibenpaket. Die profilierte Ausbildung der Achsoberfläche und der entsprechenden Ausnehmung des inneren Bauteils ermöglicht eine drehfeste Verbindung, durch die sehr hohe Drehmomente abgestützt werden können.

Der umfangsmäßige Versatz der Profile, die den unterschiedlichen durch je ein äußeres und ein inneres Bauteil gebildeten Phasen zugeordnet sind, hat eine Phasenverschiebung der Teilstränge zur Folge. Dies wirkt sich vorteilhaft aus, da jede Phase der Transversalflussmaschine einen zeitlich trapezförmigen Drehmomentverlauf liefert, bei der das Drehmoment bis auf Null abfällt. Durch die phasenverschobenen Drehmomente der einzelnen Phasen werden hohe Drehmomenteinbrüche vermieden. Der jeweilige optimale Winkel, um den die Profile unterschiedlicher Achsabschnitte zueinander versetzt sind und der ein Maß für die Phasenverschiebung der einzelnen Phasen ist, hängt insbesondere von der Anzahl der Phasen und der Anzahl der Permanentmagnetelemente je Phase ab.

Eine Phasenverschiebung kann grundsätzlich dadurch herbei geführt werden, dass die Permanentmagnetelemente zweier Phasen zueinander in Umfangsrichtung versetzt sind. Besonders vorteilhaft ist es jedoch, wenn die Permanentmagnetelemente zweier oder mehrerer Phasen die gleichen Umfangslagen einnehmen und die Phasenverschiebung durch eine entsprechende Anordnung der Ankerelemente aufgrund des Versatzes der Achsabschnitte erfolgt. In diesem Fall sind die Permanentmagnetelemente jeder Phase in einer umlaufenden Reihe beispielsweise auf der Innenfläche des äußeren Bauteils angeordnet, insbesondere aufgeklebt, und die Magnete zweier oder mehr Phasen nehmen in Umfangsrichtung die gleichen Winkellagen ein, so dass sie miteinander axial fluchten.

Eine besonders vorteilhafte Weiterbildung der Erfindung ist dadurch gegeben, dass jeder profilierte Achsabschnitt einen polygonartigen Querschnitt mit vorzugsweise drei Scheitelbereichen aufweist und dass das zugehörige Bauteil eine entsprechend ausgebildete polygonartige Ausnehmung aufweist. Der Querschnitt wird dabei durch eine Umfangslinie begrenzt, die drei abgerundete Eckbereiche aufweist, welche durch nach außen gewölbte bogenförmige Linien verbunden sind. Die Herstellung des Polygonprofils der Achse kann auf einfache Weise durch mechanische Bearbeitung mittels Schleifen und die der Ausnehmung mittels Räumen oder Stoßen erfolgen. Diese Ausgestaltung der Erfindung lässt die Übertragung besonders hoher Drehmomente zu, ohne dass das innere Bauteil durch zusätzliche Elemente wie Keile und dergleichen auf der Welle festgesetzt werden muss. Es besteht auch nicht die Gefahr des Abscherens dieser zusätzlichen Elemente.

Es ist von Vorteil, wenn die Ausnehmung des inneren Bauteils mit dem zugehörigen profilierten Achsabschnitt eine Presspassung bildet. Zur Montage werden die inneren Bauteile erwärmt und dann auf die Achse geschoben. Nach dem Abkühlen ergibt sich ein Presssitz ohne mechanisches Spiel.

Eine weitere besonders empfehlenswerte Ausgestaltung der Erfindung sieht vor, dass an den inneren auf der Achse festgelegten Bauteilen die Ankerelemente und die Erregerwicklungen angeordnet sind, während die Permanentmagnetelemente an den äußeren Bauteilen befestigt sind. Diese Ausbildung eignet sich besonders dann, wenn es sich bei der Achse nicht um eine Drehachse sondern um eine feststehende Achse handelt, da sich in diesem Fall die Kühlung der Ankerwicklung und der Ankerelemente besonders einfach gestaltet.

Zur Kühlung sind vorzugsweise in der Achse Kühlkanäle vorgesehen, die in den polygonartig ausgebildeten Achsabschnitten austretende Öffnungen aufweisen. Die inneren Bauteile weisen ebenfalls Kühlkanäle auf, die im Bereich ihrer Ausnehmungen austretende Öffnungen enthalten, die im montierten Zustand mit den Öffnungen der Achse fluchten, so dass ein Kühlmittelübergang zwischen Achse und innerem Bauteil möglich ist. Eine Presspassung zwischen dem inneren Bauteil und der Achse kann so eng ausgelegt werden, dass zur Abdichtung des Übergangsbereichs der Kühlkanäle keine besonderen Dichtungselemente erforderlich sind.

Das innere Bauteil, gegebenenfalls mit Kühlkanälen, kann in vorteilhafter Weise als Aluminiumguss hergestellt werden, bei dem lediglich geringfügige mechanische Nacharbeiten erforderlich sind. Die Ankerelemente, die aus Weicheisen bestehen, können entweder beim Gießprozess in den Umfang des inneren Bauteils integriert werden oder in äußere Schlitze eingesetzt und dort verklebt werden.

Vorzugsweise weist jedes innere Bauteil wenigstens eine Ausnehmung zur Aufnahme eines Frequenzwandlers auf. Zur Kühlung des Frequenzwandlers ist es zweckmäßig, die Kühlkanäle derart anzuordnen und auszulegen, dass durch die Kühlflüssigkeit zunächst der Frequenzwandler, der sehr empfindlich gegen Überhitzung ist, gekühlt wird, bevor die Kühlflüssigkeit durch Kühlkanäle in die radial äußere Peripherie des inneren Bauteils geleitet wird, um die dort auftretende Wärme der Ankerwicklung und anderer Bauelemente abzuführen. Für eine intensive Kühlung der Ankerwicklung kann diese auch direkt gekühlt werden, indem ihre Leiter als Kühlrohre ausgelegt sind. Bei einem Aluminiumbauteil, welches eine sehr gute Wärmeleitung gewährleistet, ist jedoch eine indirekte Kühlung ausreichend.

Eine besonders bevorzugte Weiterbildung der Erfindung sieht vor, dass ein Flansch drehfest an der Achse montiert ist, und dass sich an dem Flansch die inneren Bauteile axial abstützen. Die inneren Bauteile sind vorzugsweise scheibenförmig ausgebildet und liegen eng benachbart nebeneinander.

Vorzugsweise trägt der Flansch drei sich radial erstreckende symmetrisch auf dem Umfang verteilte Flanscharme, die der Sicherung der inneren Bauteile dienen. Vorzugsweise sind zu diesem Zweck Zugbolzen vorgesehen, die sich axial durch Ausnehmungen der inneren Bauteile und durch Ausnehmungen in den Flanschen erstrecken.

Bei der Achse kann es sich grundsätzlich um eine Drehachse handeln. Gemäß einer besonders vorteilhaften Ausgestaltung der Erfindung ist die Achse jedoch als Festachse ausgebildet, die mit einem feststehenden Tragelement verbunden ist. Vorzugsweise sind die Achse und mit ihr auch die inneren Bauteile drehfest mit einer Radachse verbunden, während die äußeren Bauteile drehfest mit einem angetriebenen sich drehenden Rad in Verbindung stehen. Bei der Achse kann es sich beispielsweise um eine nichtlenkbare starre Fahrzeughinterachse oder eine lenkbare starre Fahrzeugvorderachse handeln.

Das äußere Bauteil ist vorzugsweise als Fahrzeugradachsgehäuse, beispielsweise als Radnabe, ausgebildet.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: den schematischen Längsschnitt durch eine erfindungsgemäße Transversalflussmaschine mit zwei Phasen,
- Fig. 2: die Seitenansicht in das Innere der Transversalflussmaschine aus Fig. 1,
- Fig. 3: eine perspektivische Darstellung der Achse einer Transversalflussmaschine gemäß Fig. 1,
- Fig. 4: eine perspektivische Darstellung des als Stator ausgebildeten inneren Bauteils einer Transversalflussmaschine gemäß Fig. 1 und
- Fig. 5: den Längsschnitt durch eine weitere erfindungsgemäße Transversalflussmaschine mit vier Phasen.

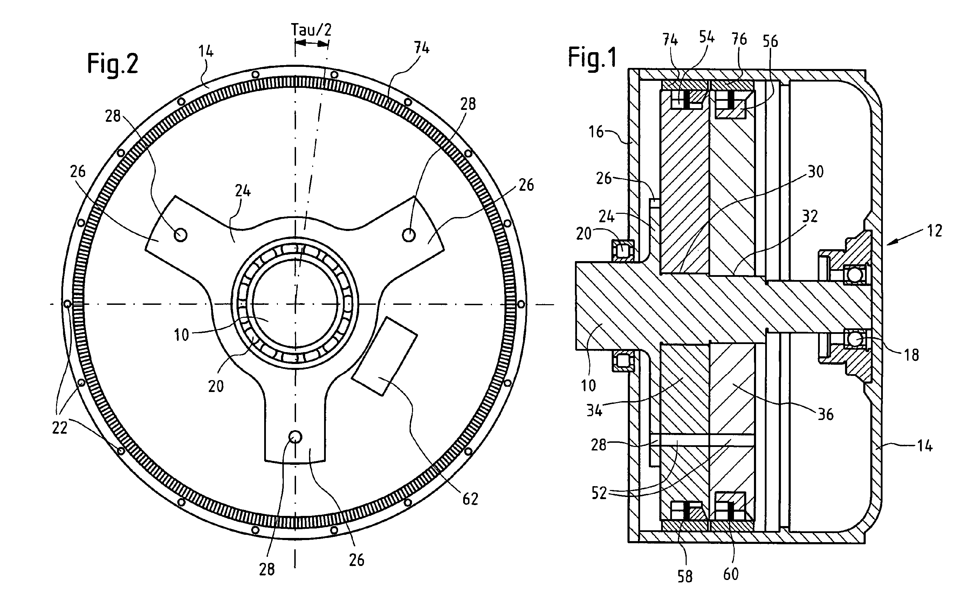

Wie aus Fig. 1 ersichtlich, besitzt die Transversalflussmaschine eine Radachse 10, die an einer nicht dargestellten starren Fahrzeugachse montiert werden kann. Eine Radnabe 12, welche im Wesentlichen ein Achsgehäuse 14 und einen Deckel 16 enthält, stützt sich über zwei Lager 18, 20 drehbar auf der Radachse 10 ab. Während das Lager 18 das Achsgehäuse 14 trägt und axial auf der Radachse 10 fixiert ist, stützt das Lager 20 die Last der Radnabe 12 über den Deckel 16 ab und lässt eine axiale Ausgleichsbewegung zu. Eine an der Radnabe 12 befestigte Radfelge und ein Reifen sind nicht näher dargestellt.

Fig. 2 ist eine linksseitige Ansicht der in Fig. 1 gezeigten Transversalflussmaschine, bei der jedoch der Deckel 16 weggelassen wurde, so dass ein Blick ins Innere möglich ist. Es ist das Achsgehäuse 14 mit auf dem Umfang verteilten Bohrungen 22, die der Montage des Deckels 16 dienen, sichtbar.

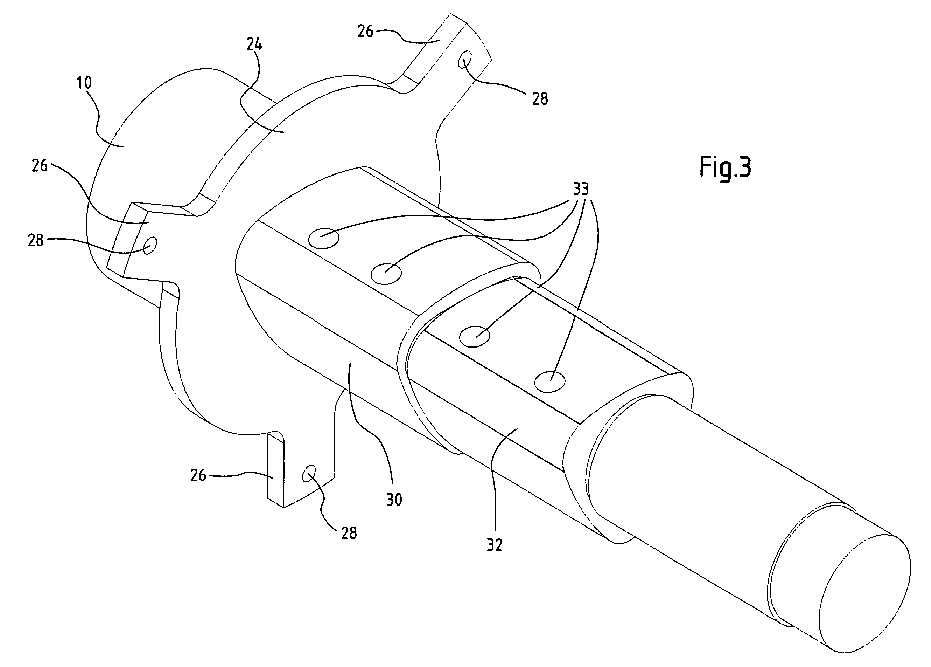

An der Radachse 10, die in Fig. 3 perspektivisch dargestellt ist, ist ein Flansch 24 angeformt, der drei sich radial nach außen erstreckende, auf dem Umfang symmetrisch angeordnete Flanscharme 26 enthält, in denen axial ausgerichtete Bohrungen 28, insbesondere Gewindebohrungen zum Einschrauben von Zugbolzen, vorgesehen sind. Die Radachse 10 enthält mehrere Achsabschnitte (30, 32), die progressiv gestuft sind, so dass der Achsquerschnitt (30, 32) aufeinanderfolgender (hinsichtlich der Figuren nach rechts) Achsabschnitte abnimmt. Es sind insbesondere zwei Achsabschnitte 30, 32 vorgesehen, deren Querschnitte nicht zylinderförmig ausgebildet sind, sondern polygonartige Profile aufweisen, wie es ins besondere aus Fig. 3 hervorgeht. Die polygonartigen Profile der beiden Achsabschnitte 30, 32 haben zwar unterschiedliche Abmessungen, sind jedoch geometrisch zueinander ähnlich. Es wird betont, dass die beiden Profile nicht miteinander fluchten, sondern zueinander leicht verdreht sind, woraus sich unterschiedliche Phasenlagen ergeben, wie später beschrieben ist.

In der Radachse 10 erstrecken sich zwei nicht näher dargestellte axiale Kühlmittelbohrungen, die in jedem der beiden polygonartig ausgebildeten Achsabschnitten 30, 32 über Öffnungen 33 an die Oberfläche treten. Die Kühlmittelbohrungen dienen der Zu- und Abfuhr von Kühlmittel.

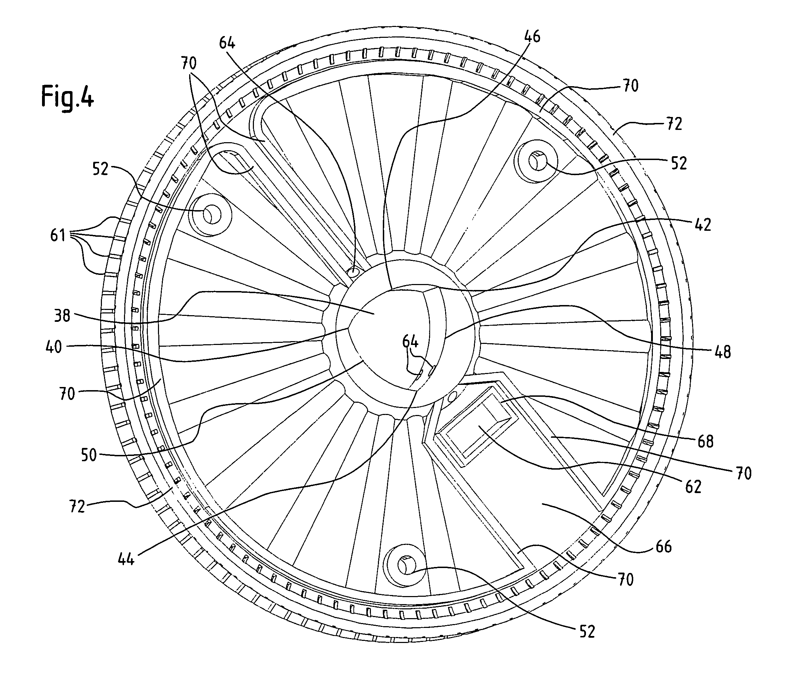

Jeder polygonartige Achsabschnitt 30, 32 trägt ein scheibenförmig ausgebildetes Statorbauteil 34, 36, welches auch inneres Bauteil genannt wird. Der Grundkörper eines solchen Statorbauteils 34, 36 ist in Fig. 4 perspektivisch dargestellt. Er enthält eine mittlere Ausnehmung 38 die einen polygonartigen Querschnitt aufweist und mit dem polygonartigen Profil des zugehörigen Achsabschnitts 30, 32 der Radachse 10 korrespondiert. Der polygonartige Querschnitt weist drei Scheitelbereiche 40, 42, 44 auf. Zur Verdeutlichung der polygonartigen Struktur wurden die Scheitelbereiche 40, 42, 44 in Fig. 4 scharfkantig dargestellt. Vorzugsweise sind die Scheitelbereich 40, 42, 44 jedoch abgerundet ausgebildet, wie es deutlicher aus der Darstellung der Achse in Fig. 3 hervorgeht. Die abgerundeten Scheitelbereiche 40, 42, 44 werden bei einer Querschnittansicht durch je eine nach außen gewölbte bogenförmige Linie 46, 48, 50 verbunden. Die in Fig. 1 dargestellten Statorbauteile 34, 36 sind weitgehend identisch. Sie unterscheiden sich lediglich in den Querschnittsmaßen ihrer jeweiligen Ausnehmungen 38, die an sich zueinander ähnlich sind. Entsprechend der gestuften Ausbildung der Radnabe 10 sind die Querschnittsmaße der Ausnehmung des rechten Statorbauteils 36 kleiner als die Querschnittsmasse der Ausnehmung des linken Statorbauteils 34.

Durch jedes Statorbauteil 34, 36 erstrecken sich drei axiale Bohrungen 52, die mit den Bohrungen 28 der Flanscharme 26 korrespondieren. Durch die Bohrungen 28 und 52 lassen sich nicht näher dargestellte Zugbolzen einführen und in die Gewindebohrungen 28 des Flansches 24 eindrehen, so dass die Statorbauteile 34, 36 am Flansch 24 befestigt sind.

Jedes Statorbauteil 34, 36 enthält in seinem Umfangsbereich eine Vielzahl von gleichmäßig auf dem Umfang verteilten Ankerelementen 54, 56 aus Weicheisen, die eine umlaufende Ringspule 58, 60 einschließen und mit dieser induktiv gekoppelt sind. Die in Fig. 1 dargestellten Querschnitte der Ankerelemente 54, 56 der beiden benachbarten Statorbauteile 34, 36 unterscheiden sich, da die beiden Statorbauteile 34, 36 zueinander leicht verdreht (phasenverschoben) sind. In Fig. 4 sind lediglich Aufnahmen 61 für die Ankerelemente, nicht jedoch die Ankerelemente als solche, dargestellt.

Wie aus Fig. 4 hervorgeht, ist in den Grundkörper des Statorbauteils 34, 36 eine Ausnehmung 62 zur Aufnahme eines nicht dargestellten Frequenzwandlers. Des Weiteren sind Kühlkanäle erkennbar. Diese enthalten im Wesentlichen radial verlaufende Bohrungen 64, die im Bereich der mittleren Ausnehmung 38 münden und zu den Öffnungen 33 der Radachse 10 korrespondieren. Die Bohrungen 64 führen in Kanalbereiche 66, welche durch eine die Ausnehmung 62 einfassende axial vorstehende Wandung 68, durch weitere axial vorstehende Kanalwandungen 70 und durch einen äußeren axial vorspringenden Ringbereich 72 begrenzt werden. Die Kanalbereiche 66 werden in axialer Hinsicht durch eine nicht näher dargestellte Abdeckung verschlossen. Das Kühlmittel wird durch die Bohrungen 64 und die Kanalbereiche 66 derart geführt, dass zunächst der in der Ausnehmung 62 montierte Frequenzwandler und anschließend die äußeren Bereiche des Statorbauteils 34, 36, in dem sich die Ringspule 58, 60 befindet, gekühlt werden.

Auf einer zylindrischen Innenfläche des Achsgehäuses 14 sind Permanentmagnete 74, 76 befestigt, insbesondere aufgeklebt. Die Permanentmagnete 74, 76 sind in zwei umlaufenden Reihen angeordnet. Je zwei benachbarte Magnete einer Magnetreihe sind zueinander entgegengesetzt polarisiert. Axial benachbarte Permanentmagnete 74, 76 fluchten miteinander, d. h. sie nehmen die gleiche Winkellage ein und sind in Umfangsrichtung nicht gegeneinander versetzt. Die Permanentmagnete 74, 76 einer Magnetreihe können auch auf gesonderten Tragringen befestigt sein, was jedoch nicht dargestellt wurde. Jede Magnetreihe bildet, gegebenenfalls mit ihrem Tragring, ein sogenanntes äußeres Bauteil. Wie aus Fig. 1 ersichtlich ist, nimmt jede Magnetreihe 74, 76 die gleiche axiale Lage ein wie das zugehörige Statorbauteil 34, 36. Zwischen den Ankerelementen 54, 56 der Statorbauteile 34, 36 und den Permanentmagneten 74, 76 befindet sich ein Luftspalt von in etwa 1 mm.

Je ein Statorbauteil 34, 36 bildet gemeinsam mit der zugehörigen Magnetreihe 74, 76 eine Phase der Transversalflussmaschine. Da die Profile der Achsabschnitte 30, 32 gegeneinander verdreht sind, die Permanentmagnete der beiden Magnetreihen jedoch miteinander fluchten, ergeben sich für die beiden Phasen der Transversalflussmaschine unterschiedliche Phasenlagen. Die Phasenverschiebung entspricht vorzugsweise dem halben Abstand zwischen zwei benachbarten Permanentmagneten 74, 76 bzw. zwischen zwei benachbarten Ankerelementen 54, 56 und ist in Fig. 2 mit Tau/2 gekennzeichnet. Der in Fig. 2 dargestellte Winkel Tau/2 ist der Anschaulichkeit halber vergrößert dargestellt.

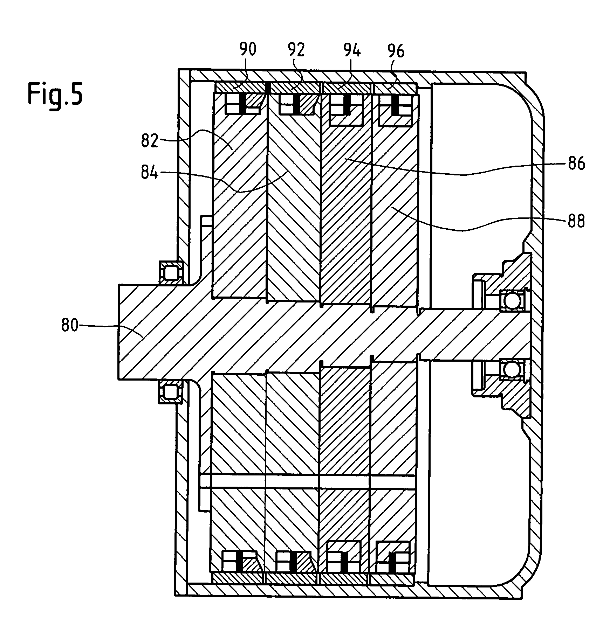

Die Fig. 5 zeigt eine alternative Ausführungsform der Transversalflussmaschine, welche nicht zwei Phasen, wie die Maschine der Fig. 1, sondern vier Phasen aufweist. Infolgedessen hat die Radachse 80 vier Achsabschnitte mit polygonartig ausgebildetem Profil, welche je ein Statorbauteil 82, 84, 86, 88 aufnehmen, die jeweils um einen Winkel von Tau/4 gegeneinander verdreht sind, wobei Tau wiederum dem Abstand zweier in Umfangsrichtung benachbarter Ankerelemente entspricht. Jedem Statorbauteil 82, 84, 86, 88 ist eine Magnetringreihe 90, 92, 94, 96 zugeordnet, so dass je ein Ankerelement mit der zugehörigen Magnetringreihe 90, 92, 94, 96 eine der vier Phasen der Transversalmaschine bildet. Da die übrigen Einzelheiten der in Fig. 5 dargestellten Maschine im Wesentlichen mit denen der Fig. 1 bis 4 dargestellten Maschine übereinstimmen, werden sie nicht erneut beschrieben.

Auch wenn die Erfindung lediglich anhand zweier Ausführungsbeispiele beschrieben wurde, erschließen sich für den Fachmann im Lichte der vorstehenden Beschreibung sowie der Zeichnung viele verschiedenartige Alternativen, Modifikationen und Varianten, die unter die vorliegende Erfindung fallen. Beispielsweise kann die Transversalflussmaschine im Prinzip eine beliebige Anzahl von Phasen aufweisen.

## Patentansprüche

1. Transversalflussmaschine mit wenigstens zwei im Wesentlichen zylinder- oder scheibenförmigen auf einer Achse (10, 80) montierten inneren Bauteilen (34, 36) und mit die inneren Bauteile (34, 36; 82, 84, 86, 88) konzentrisch umgebenden äußeren Bauteilen (74, 76; 90, 92, 94, 96), die relativ zu den inneren Bauteilen (34, 36; 82, 84, 86, 88) verdrehbar sind, wobei miteinander korrespondierende innere Bauteile (34, 36; 82, 84, 86, 88) und äußere Bauteile (74, 76; 90, 92, 94, 96) jeweils wenigstens eine Phase der Transversalflussmaschine enthalten und einerseits in Umfangsrichtung zueinander beabstandet angeordnete, alternierend gepolte Permanentmagnetelemente (74, 76; 90, 92, 94, 96) und andererseits in Umfangsrichtung angeordnete Ankerelemente (54, 56), welche wenigstens eine sich in Umfangsrichtung erstreckende Erregerwicklung (58, 60) einschließen, enthalten, **dadurch gekennzeichnet, dass** die inneren Bauteile (34, 36; 82, 84, 86, 88) auf einer zu einer Seite hin progressiv gestuft ausgebildeten Achse (10, 80) befestigt sind und dass jeder einem inneren Bauteil (34, 36; 82, 84, 86, 88) zugeordnete, sich axial erstreckende Abschnitt (30, 32) der Achse (10, 80) ein von der Zylinderform abweichendes Profil aufweist, welches mit einem entsprechenden Profil einer zentralen Ausnehmung (38) des zugehörigen inneren Bauteils (34, 36; 82, 84, 86, 88) übereinstimmt, und dass die Profile unterschiedlicher axialer Achsabschnitte (30, 32) hinsichtlich der Umfangsrichtung derart zueinander versetzt sind, dass sich für die einzelnen Phasen unterschiedliche Phasenlagen ergeben.

2. Transversalflussmaschine nach Anspruch 1, **dadurch gekennzeichnet, dass** jeder Achsabschnitt (30, 32) einen polygonartigen Querschnitt mit vorzugsweise drei Scheitelbereichen (40, 42, 44) aufweist und dass das zugehörige Bauteil (34, 36; 82, 84, 86, 88) eine entsprechend ausgebildete polygonartige Bohrung (38) aufweist.

3. Transversalflussmaschine nach Anspruch 1 oder 2, **dadurch gekennzeichnet, dass** die Permanentmagnetelemente (74, 76; 90, 92, 94, 96) zweier oder mehrerer Phasen die gleichen Umfangslagen einnehmen.

4. Transversalflussmaschine nach einem der vorhergehenden Ansprüche, **dadurch gekennzeichnet, dass** die inneren Bauteile (34, 36; 82, 84, 86, 88) Ankerelemente (54, 56) und die Erregerwicklung (58, 60) enthalten und dass die äußeren Bauteile die Permanentmagnetelemente (74, 76; 90, 92, 94, 96) tragen.

5. Transversalflussmaschine nach einem der vorhergehenden Ansprüche, **dadurch gekennzeichnet, dass** in der Achse (10, 80) Kühlkanäle vorgesehen sind, die in den Achsabschnitten (30, 32) austretende Öffnungen (33) aufweisen und dass die inneren Bauteile (34, 36; 82, 84, 86, 88) Kühlkanäle (66) mit hierzu korrespondierenden Öffnungen (64) aufweisen.

6. Transversalflussmaschine nach einem der vorhergehenden Ansprüche, **dadurch gekennzeichnet, dass** ein inneres Bauteil (34, 36; 82, 84, 86, 88) mit dem zugehörigen Achsabschnitt (30, 32) eine Presspassung bildet.

7. Transversalflussmaschine nach einem der vorhergehenden Ansprüche, **dadurch gekennzeichnet, dass** ein inneres Bauteil (34, 36; 82, 84, 86, 88) wenigstens eine Ausnehmung (62) zur Aufnahme eines Frequenzwandlers aufweist.

8. Transversalflussmaschine nach Anspruch 7, **dadurch gekennzeichnet, dass** bei einem inneren Bauteil (34, 36; 82, 84, 86, 88) wenigstens ein Kühlkanal (66) derart ausgebildet ist, dass mit erster Priorität der Frequenzwandler gekühlt wird.

9. Transversalflussmaschine nach einem der vorhergehenden Ansprüche, **dadurch gekennzeichnet, dass** an der Achse (10, 80) drehfest ein Flansch (24) montiert ist, an welchem sich die inneren Bauteile (34, 36; 82, 84, 86, 88) axial abstützen.

10. Transversalflussmaschine nach Anspruch 9, **dadurch gekennzeichnet, dass** der Flansch (24) drei sich radial erstreckende symmetrisch auf dem Umfang verteilte Flanscharme (26) trägt.

11. Transversalflussmaschine nach Anspruch 9 oder 10, **dadurch gekennzeichnet, dass** die inneren Bauteile (34, 36; 82, 84, 86, 88) durch sich axial erstreckende Zugbolzen am Flansch (24) befestigt sind.

12. Transversalflussmaschine nach einem der vorhergehenden Ansprüche, **dadurch gekennzeichnet, dass** die Achse (10, 80) mit den inneren Bauteilen (34, 36; 82, 84, 86, 88) drehfest mit einer Radachse verbindbar ist und dass die äußeren Bauteile (74, 76; 90, 92, 94, 96) drehfest mit einem angetriebenen Rad verbindbar sind.

13. Transversalflussmaschine nach Anspruch 12, **dadurch gekennzeichnet, dass** das äußere Bauteil als Fahrzeugradachsgehäuse (14) ausgebildet ist.
